# EUROPEAN PATENT APPLICATION

(11) **EP 2 017 704 A1**
(43) Date of publication of application: **21.01.2009**
(21) Application number: 08290458.2
(22) Date of filing: 16.05.2008
(51) Int. Cl.: G06F 3/043

(54) **Touch sensing device**

(30) Priority: 09.07.2007 EP 07290856
(71) Applicant: Sensitive Object, 92100 Boulogne Billancourt (FR)
(72) Inventor: Duheille, Rémi, 92500 Rueil Malmaison (FR); Fillon, Thomas, 91600 Savigny-sur-Orge (FR); Pelletier, Sébastien, 92130 Issy Les Moulineaux (FR)
(74) Representative: Grünecker, Kinkeldey, Stockmair & Schwanhäusser Anwaltssozietät

(57) **Abstract**

The invention relates to a touch sensing device for localizing mechanical impacts on a tactile plate. According to the invention, at least one acoustic transducer is mounted on the tactile plate by means of an acoustic isolator, such that the acoustic transducer and the tactile plate are in direct contact with each other and the acoustic transducer is acoustically shielded by the acoustic isolator. Thus, the acoustic waves can be detected with little distortions and the reliability of the touch sensing device can be improved. The invention also relates to a touch sensing device comprising a tactile plate and a sensor module comprising at least one acoustic transducer and a fastening means to fix the sensor module to the tactile plate, wherein the fastening means is a sticky tape, in particular a double sided sticky tape.

## Description

The invention relates to a touch sensing device for localizing mechanical impacts on a tactile plate.

On each location of an object, a mechanical impact induces a characteristic acoustic signature which can be detected on a surface of the object by means of one or more acoustic transducers. Thus, the origin of this mechanical impact can be determined by subsequent digital signal processing. Such objects are therefore also referred to as tactile plates. As these can be made of almost any solid or soft material of any shape and detectable impacts are easily produced with a fingertip or the like, nearly any accessible surface of an apparatus can theoretically be turned into a control interface. Due to the conceptual flexibility, demand for such man-machine interfaces has recently increased in the medical field, for industrial applications or in commercial systems such as point of sales terminals and information kiosks.

In these applications, one or more acoustic transducers are glued using epoxy or UV or light curing glues, following the indications of the manufacturers of the transducers at predetermined points on the back side of the respective tactile plate. Furthermore the transducers can be shielded in this configuration from unwanted environmental influences. It has, however, been found that signal quality can vary to an inappropriate extent and that therefore the localization of an impact on the tactile plate sometimes does not work reliably. In addition, the gluing step is cumbersome as in one case a two component glue needs to be used and in the second case an additional UV or light irradiation step needs to be carried out to achieve the desired hardening of the glue.

It is therefore the object of the invention to overcome these disadvantages and to provide an improved touch sensing device.

This object is achieved with the touch sensing device according to the features of claim 1.

The acoustic isolator of the invention is fixed to the tactile plate such that the acoustic transducer is in direct contact with the tactile plate. Thus, an adhesive means between the acoustic transducer and the tactile plate is not required anymore. Surprisingly, it appeared that due to this configuration the unwanted distortions of the captured signals could be reduced. Furthermore, damage of the acoustic transducers due to gluing can be avoided, thereby reducing production costs and improving the reliability of the device. Furthermore the distance of the acoustic transducers amongst each other is fixed by the acoustic isolator therefore facilitating the data analyzing.

The touch sensing device is produced by providing a tactile plate and a sensor module comprising an acoustic isolator and at least one acoustic transducer. Thus, the sensor module can be separately and efficiently produced in great quantities and at specially adapted work places.

Here direct contact means that no additional materials, e.g. adhesive layers, are disposed between the acoustic transducer and the tactile plate. Furthermore, in the following an acoustic transducer can for example be a piezoelectric transducer, a strain gauge, a micro electromechanical sensor or an intelligent sensor, but is not limited to this list.

In a preferred embodiment, the acoustic isolator can comprise a recess and the transducer can be embedded within said recess such that a coupling surface of the transducer is flush mount with the acoustic isolator or protrudes from the acoustic isolator by no more than the thickness of the acoustic transducer. This allows for a precise placement of the acoustic transducer with respect to the acoustic isolator and ensures an appropriate contact of the acoustic transducer with the tactile plate in a mounted state without disturbing the quality of the signals.

Preferably, the acoustic isolator can comprise at least one channel for connecting wires or at least one conductive trace. This provides appropriate acoustic shielding at the electrical connections and reduces the space needed for the electrical connections.

In a preferred embodiment, the tactile plate can comprise an impact surface and a coupling surface, and the acoustic transducer is disposed between the coupling surface of the tactile plate and the acoustic isolator. In this configuration, the transducer can be placed on the back side of the tactile plate, thereby creating a virtual keyboard without design restrictions. Furthermore, the acoustic transducer is protected against mechanical, chemical, environmental damages and is shielded from electro mechanical and acoustic disturbances. Preferably, the acoustic transducer of the touch sensing device can comprise a mounting surface, and wherein a first adhesive means is disposed between the acoustic isolator and the mounting surface of the acoustic transducer, and a second adhesive means is disposed between the acoustic isolator and the tactile plate. This allows for a convenient and reliable mounting, without affecting the interface between the tactile plate and the mounting surface of the acoustic transducer.

Preferably, the first adhesive means can be adapted to the material of the mounting surface of the transducer and the second adhesive means can be adapted to the material of the tactile plate. This ensures that the acoustic transducer can be mounted on a variety of materials with respect to the acoustic isolator but also indirectly with respect to the tactile plate, such that a reliable fixation can be achieved without distorting the acoustic signals.

A preferred embodiment of the touch sensing device can further comprise a reinforcement member, whereby the reinforcement member is disposed over the side of the acoustic isolator opposite to the acoustic transducer. The reinforcement member can improve the mechanical stability of the sensing device without deteriorating the acoustic signals to be sensed by the acoustic transducer. According to a particular advantageous embodiment the reinforcement member can be a circuit board thus fulfilling both the reinforcement function and electronic functionalities.

In a preferred embodiment, the acoustic isolator can be resilient, in particular be made of foams such as silicone or polyurethane foam. This avoids disturbance of the acoustic waves inside the tactile plate and assures at the same time an appropriate contact of the acoustic transducer with the tactile plate and a protection of the transducers against damages. The acoustic isolator can further include connecting wires or conductive traces, therefore ensuring at the same time the connection of the transducer.

According to preferred variants, the acoustic isolator and the acoustic transducers can have a bar shape or an L-like shape. In such a configuration, when at least two acoustic transducers are used, the position of the acoustic transducers can be easily and precisely adjusted to a rectangular mounting pattern typically used in the applications like described above.

The invention also relates to a sensor module for the use in a touch sensing device like described above, and comprising: at least one acoustic transducer, an acoustic isolator, wherein the acoustic isolator comprises an adhesive means on its surface such that, in a state where the acoustic isolator is fixed to the tactile plate, the at least one acoustic transducer is in direct contact with the tactile plate of the touch sensing device. This ensures that the acoustic transducer is in direct contact with the tactile plate, once the sensor module is fixed to the tactile plate.

The object of the invention is furthermore achieved with the touch sensing device according to the features of claim 9, providing an alternative solution.

Accordingly the alternative touch sensing device comprises a tactile plate and a sensor module comprising at least one acoustic transducer and a fastening means to fix the transducer module to the tactile plate, wherein the fastening means is a sticky tape, in particular a double sided sticky tape. Using the sticky tape the procedure of fixing the sensor module to the tactile plate is facilitated compared to the use of epoxy glue or UV or light curing glues. Surprisingly, the use of the sticky tape provides the necessary stability and signal performance to the device, even if the transducer manufacturers impose the above mentioned glues to obtain the desired functionality. In addition, the sticky tape provides the minimal necessary acoustic isolation such that an additional acoustic isolator is not mandatory and the sticky tape stands as the acoustic isolator.

Preferably, the sensor module can further comprise a second fastening means wherein the acoustic transducer is sandwiched between the previous fastening means and the second fastening means. Thereby the acoustic transducer can be protected from the environment which is even further improved when the fastening means and the second fastening means overlap the acoustic transducer laterally such that in the overlapped region they are in contact with each other. In particular an electric isolation is achieved. This sensor module is also protected during the mounting operations against damages such as corrosion or stresses.

Preferably the fastening means and the second fastening means can be out of one piece of sticky tape. This additional feature further facilitates the fabrication process as the acoustic transducer is simply wrapped inside the sticky tape.

According to a preferred embodiment, the connecting wires of the touch sensing device can be sandwiched between the first fastening means and the second fastening means. Enveloping the wires leading to the connecting interface of the sensor module, has the advantage that using the same means as to fix the sensor modules, stress on the connections between the wires and the acoustic transducer can be absorbed, at least to a large extent. This leads to a longer lifetime of the sensor module.

Preferably, the connecting wires can be arranged away from the side of the acoustic transducer where the one piece of sticky tape is wrapped around the acoustic transducer. No additional openings to pass through the wires need to be provided inside the sticky tape, thus further facilitating the assembly of the sensor module.

According to a preferred embodiment, the thickness of the adhesive layer or adhesive layers can be each less than 80µm, in particular about 70µm. With such a thickness, at the same time sufficient protection against outside damages and the filtering effect on the acoustic waves can be kept at such a low level that the corresponding sensed signals can still be exploited sufficiently.

Advantageously, the fastening means can be fixed to the tactile plate such that the at least one acoustic transducer is in direct contact with the tactile plate. Thus the advantages of the first embodiment of the invention can be combined with the ones of the alternative solution.

Advantageously, the fastening means and/or the second fastening means can comprise a means for positioning and/or identifying transducers. The means for positioning facilitates the alignment of the sensor module with respect to predetermined positions, e.g. the edges of the tactile plate. According to one variant it is the shape of the fastening means and/or the second fastening means which provides the positioning capability. For instance the fastening means and/or second fastening means can have a rectangular shape, in particular larger than the acoustic transducer. Even in cases when the shape of the acoustic transducer is irregular, the use of a rectangular fastening means facilitates the alignment of the sensor module with respect to e.g. the edges of the tactile plate. Any shape braking the symmetry of the acoustic transducer, which in most cases is circular in shape, would be suitable to facilitate the alignment.

The invention also relates to a sensor module for the use in a touch sensing device as described above, and which comprises at least one acoustic transducer and a fastening means to fix the sensor module to the tactile plate, wherein the fastening means is a sticky tape, in particular a double sided sticky tape. Using the sticky tape the procedure of fixing the sensor module to the tactile plate is facilitated compared to the use of epoxy glue or UV curing glue. Surprisingly, the use of the sticky tape provides the necessary stability and signal performance to the device, even if the transducer manufacturers impose the above mentioned glues to obtain the desired functionality. In addition, the sticky tape provides the necessary acoustic isolation such that an additional acoustic isolator is not mandatory.

Preferably, the fastening means can furthermore comprise a liner over the sticky tape, when the sensor module is not yet used in the touch sensing device. With this liner, the adhesive not yet met in contact with a tactile plate of the unmounted sensor module is protected against contamination, like dust etc. To fix the module to the tactile plate, one simply removes the liner from the adhesive layer of the sticky tape and brings the sensor module and the tactile plate into contact. Thus an easy protection is achieved which also allows for a simple integration of the module in a touch sensing device.

The several preferred embodiments of the two alternatives can be combined, like for example the use of a reinforcing member in the second alternative of the additional use of a resilient acoustic isolator to further improve the sensed signal quality. Also the means for positioning and/or identifying can find its application in both alternatives.

The invention also relates to the use of a double sided sticky tape to fix an acoustic sensor to a tactile plate. This use brings the same advantageous effects as already described above.

The invention also relates to a method for producing a touch sensing device, comprising the steps of providing a tactile plate, providing a sensor module comprising at least one acoustic transducer and an acoustic isolator, and fixing the acoustic isolator to the tactile plate such that the acoustic transducer is in direct contact with the tactile plate.

Preferred embodiments of the invention are shown in the figures and will be explained in the following.
- Fig. 1: illustrates a schematic oblique view of a first embodiment of the touch sensing device according to the invention,
- Fig. 2: illustrates a partially exploded detailed view of the first embodiment,
- Fig. 3a and 3b: illustrates a bottom view of two examples of a second embodiment of the touch sensing device according to the invention,
- Fig. 4: shows a flow chart of a method for producing the first embodiment,
- Fig. 5a to 5c: show a third embodiment according to the invention, namely a schematic side view of a sensor module according to the invention, a top view of the sensor module, and the sensor module in combination with a tactile plate forming a touch sensing device according to the invention, and
- Fig. 6: illustrates a fourth embodiment according to the invention.

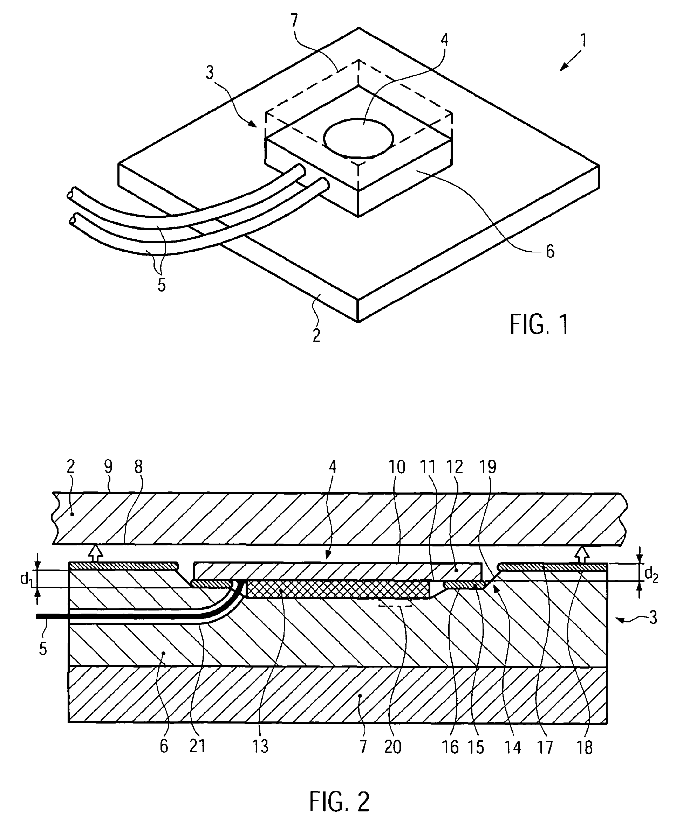

Fig. 1 shows the back side of a first embodiment of a touch sensing device 1 according to the invention, comprising a tactile plate 2 and a sensor module 3 which comprises an acoustic sensor 4, connecting wires 5, an acoustic isolator 6 and a reinforcement member 7, which is drawn with broken lines.

In Fig. 2 shows a side cut and partially exploded view of the sensor device 1 shown in figure 1, which corresponds to a state prior to mounting the sensor module 3 to the tactile plate 2.

The tactile plate 2 has a coupling surface 8 towards the sensor module 3 and an impact surface 9, arranged towards a user who can provide an input. The tactile plate can be made out of any material suitable to transfer acoustic signals. Preferred materials are solid material such as glass, plastic, metal, wood and soft material such as leather or foams, with the list not being limiting.

The acoustic transducer 4 has a transducer coupling surface 10 and a transducer mounting surface 11. In this embodiment, the acoustic transducer 4 is a piezoelectric transducer, comprising a ceramic material 13 on which are located the cathode and the anode of the acoustic transducer. The acoustic transducer can comprise a metal part 12 linked to the anode of the ceramic material 13 and where the transducer coupling surface 10 and the transducer mounting surface 11 are disposed on opposing sides. When seen from the side of cathode 13, the transducer mounting surface 11 of the acoustic transducer 4 is substantially disk-shaped. It is, however, understood that the acoustic transducer 4 in this embodiment represents one possible transducer type, and that the invention can also be realized with other types of acoustic transducer, such as strain gauge, micro electromechanical sensor, intelligent sensor and any other shapes such as ring, square, rectangle. The acoustic isolator 6 of a resilient material, which, for example, can be made of a silicone or polyurethane foam, has a recess 14, in which the acoustic transducer 4 can be embedded. A first adhesive means 15 is disposed between the transducer mounting surface 11 of the acoustic transducer 5 and a first mounting surface 16 of the acoustic isolator 6, being positioned within the recess 14.

In this embodiment, the recess 14 has a shape which is adapted to the outer edge of the transducer mounting surface 11 of the acoustic transducer 4, such that the latter is guided by the recess 14 into a predetermined mounting position with respect to the acoustic isolator 6. A second adhesive means 17 is disposed on a second mounting surface 18 of the acoustic isolator 6. The second adhesive means 17 is not provided in the recess 14 of the acoustic isolator 6.

In this embodiment, the recess 14 further comprises an inclined portion 19 disposed between the first and second mounting surfaces 16 and 18. The inclined portion 19 prevents that the second adhesive means 17 comes in contact with the transducer coupling surface 10 of the acoustic transducer 4.

The distance d₁ between the first and second mounting surfaces 16 and 18 in a relaxed state (prior to fixing to the tactile plate 2) of the acoustic isolator 6 is equal to, or smaller than the distance d₂ between the transducer coupling surface 10 and the transducer mounting surface 11 of the acoustic transducer 4. In this respect, d₁ corresponds to the depth of the recess 14 at the first mounting surface 16, and d₂ corresponds to the thickness of the anode 11. Thus, in a state where the acoustic transducer 4 is fixed within the recess 14, the transducer coupling surface 10 is either flush with, or protrudes from the second mounting surface 18 of the acoustic isolator 6. In this respect, it should be noted that the layer thickness of the first and second adhesives 15 and 17 is overemphasized in Fig. 2 for the sake of clarity. Actually, the thickness of these layers can be neglected.

The reinforcement member 7 stiffens the sensor module 3 and is typically made out of plastic material or a printed circuit board. The reinforcement member 7 can be fixed to the acoustic isolator 6 by any means, for example by an adhesive (not shown), as long as the fixation does not substantially compromise the acoustic decoupling function of the acoustic isolator 6. Furthermore, the reinforcement member 7 is not limited to the shape shown in Fig. 1. It is however required that the reinforcement member 7 does not have direct contact with the acoustic transducer 4, such that both parts 4 and 7 are acoustically decoupled from each other.

In Fig. 2, the connecting wire 5 is connected to the anode 12, for example by soldering or welding. The cathode 13 could be connected in an analogous manner or by a conductive trace 20 (as indicated by the broken line) formed on the acoustic isolator 6 and brought in direct contact with cathode 13. It is, however, understood that the electrical connections of the acoustic transducer 4 can be established by any means, like wires 5 or conductive traces 20. The use of conductive traces 20, has the advantage that it results in a particularly flat and robust sensor module 3.

To achieve the electrical connections, the acoustic isolator 6 further comprises a channel 21 for the connecting wire 5. In this embodiment, the channel 21 is formed as a through-hole in the acoustic isolator 6. It is, however, also feasible that the channel 21 is at least partly formed as a recess. In this respect, it is merely required that the channel 21 does not substantially decrease the acoustic decoupling function of the acoustic isolator 11.

According to the invention, in a state where the sensor module 3 is attached to the tactile plate 2 (indicated by bold arrows), the coupling surface 10 of the acoustic transducer 4 is in direct contact with the tactile plate 2. In this respect, direct contact means that no additional materials, such as adhesive layers, are disposed between the coupling surface and the tactile plate 2, so that acoustic waves can be sensed without suffering distortions previously caused by the presence of glue between the acoustic transducer and the tactile plate. Furthermore it was observed that less breakage of the acoustic sensor modules occurred.

In the first embodiment, the acoustic transducer 4 is disposed between the acoustic isolator 6 and the coupling surface 8 of the tactile plate 2. Thus, the acoustic transducer 5 is shielded from mechanical, chemical and environmental damages and is not accessible or visible from the side of the impact surface 9. It is, however, feasible to dispose the sensor module 3 on any surface of the tactile plate 2, in particular on the impact surface 3, for example, when mechanical protection can be provided by an additional cover disposed on a region of the tactile plate that is not needed for input.

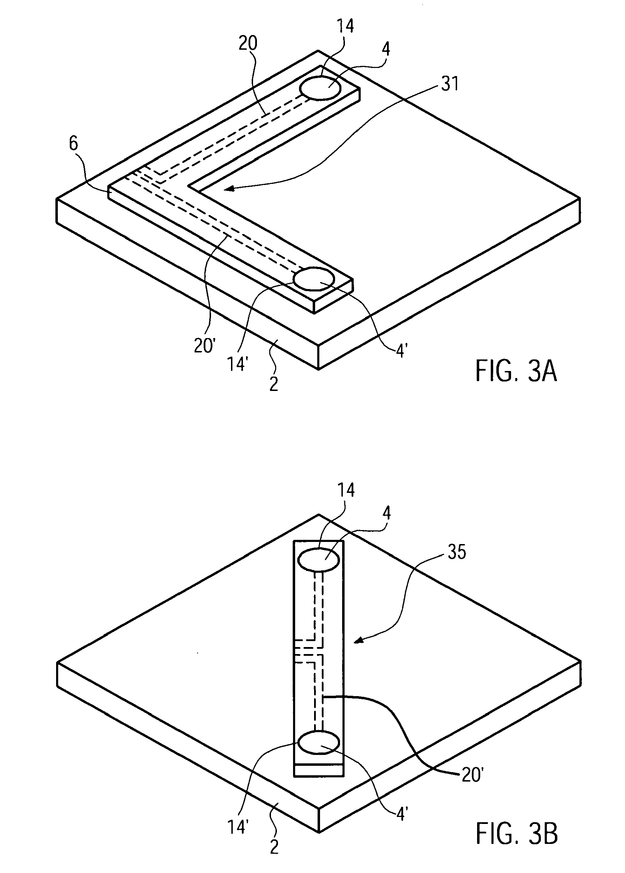

Fig. 3a illustrates a second embodiment of the touch sensing device according to the invention, comprising an L-shaped sensor module 31 for the use in a touch sensing device having a two-dimensional coupling surface, wherein two acoustic transducers 5 are disposed on a single acoustic isolator 6. Apart from the arrangement of the transducers 4 and 4' in the L-shaped sensor module 31, there are no further differences between embodiment one and two. Thus, elements in the second embodiment having the same reference numeral as in the first embodiment will not be described in detail again, but their description is incorporated by reference. The L-shape can be conveniently aligned on a rectangular tactile plate 32, whereby the correct spacing of the acoustic transducers 4 with respect to each other is obtained by means of the given mounting positions in the recesses 14 and 14' of the acoustic isolator 6. Having a fixed distance between the acoustic transducers 4 and 4' has the advantage that calibration of the touch sensing device is simplified.

The broken lines in Fig. 2 indicate conductive traces 20 running along the acoustic isolator 6. However, again the traces 20 could as well be replaced by connecting wires 5, like described above.

Apart from the L-shape of Fig. 3a, the sensor module 3, 31 can be provided in many different shapes, in particular in a linear bar-like fashion 35 of Fig. 3b. This shape can be preferable when the sensor module is used when the positioning of the sensor module 3 across the tactile plate 2 can be guided by appropriate marks. Of course, the sensor module 3, 31 or 35 can comprise more acoustic transducers than illustrated, depending on the application. Disposing at least two acoustic transducers 4 and 4' in one acoustic isolator 6 has the advantage that the acoustic transducers 4 and 4' have a fixed distance from each other, which simplifies the calibration and reproducibility of the touch sensing device 1.

Depending on the size of the touch sensing device, a certain number of sensor modules having a different number of acoustic transducers are used. In this manner, the touch sensitive device 1 can be adapted to a great variety of sizes and shapes.

In the following, the function of the touch sensing device 1 is described. In the tactile plate 2, an acoustic wave is generated by touching the impact surface 3, for example, with a fingertip or pen. As the acoustic wave travels through the tactile plate 2, it reaches the coupling surface 8 thereof and furthermore reaches a region which is in direct contact with the coupling surface 10 of the acoustic transducer 4. Due to the direct contact, the acoustic wave is coupled to the acoustic transducer 4 with little distortion and is converted by the transducer 4 into a characteristic electrical signal which is fed via connecting wires 5 and/or conductive traces 20 into a digital processing unit (not shown). When signals from at least one acoustic transducer 4, which is located at a predetermined position with respect to the tactile plate 2 in the recess 14 of the acoustic isolator 6, are evaluated by the processing unit, the location of the impact on the tactile plate 2 can be determined by the processing unit. During sensing, the acoustic isolator 6 shields the acoustic transducer 4 from unwanted disturbances present in the environment of the touch sensing device 1.

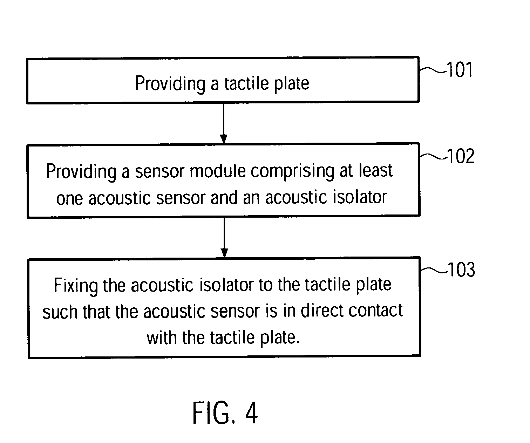

In the following, the inventive method for producing the touch sensing device of the first embodiment is described in accordance with Fig. 4. In a first step 101, the tactile plate 2 is provided. In a second step 102, the sensor module 3 comprising the acoustic transducer 4 and the acoustic isolator 6 is provided.

The sensing module 3 is preferably provided in a pre-assembled state and is then completed by disposing the second adhesive 17 on the second mounting surface 18 of the acoustic isolator 4, but not on the coupling surface 10 of the acoustic detector 4. In this respect, the inclined portion 19 of the recess 14 helps to avoid that the coupling surface 10 of the acoustic detector 4 is contaminated with the second adhesive 17. The pre-assembled sensor module 3 may, like already described above, also comprise the reinforcement member 7.

In a third step 103, the sensor module 3 is fixed to the tactile plate 2 by attaching the acoustic isolator 3 to the tactile plate 2 and fixing it by hardening of the second adhesive 17, thereby achieving direct contact of the acoustic transducer 4 with the tactile plate 2 and, at the same time, avoiding that the second adhesive 17 is disposed between the acoustic transducer 4 and the tactile plate 2.

The pre-assembly of the sensor module 3 may comprise partly advancing the connecting wire 5 of the acoustic transducer 4 through the channel 21 of acoustic isolator 6 and disposing the first adhesive 15 on the first mounting surface 16 of the acoustic isolator 6. Then, the wire 5 can be further advanced through the channel 21 and the acoustic transducer 4 can be placed on the first mounting surface 16 within the recess 14. After hardening of the first adhesive 15, the sensor module 3 is pre-assembled. Like mentioned above, instead of wires, conductive lines 20, 20' can be disposed on the acoustic isolator 6. Preferably, a large quantity of such sensor modules 3 are pre-assembled on a special work place.

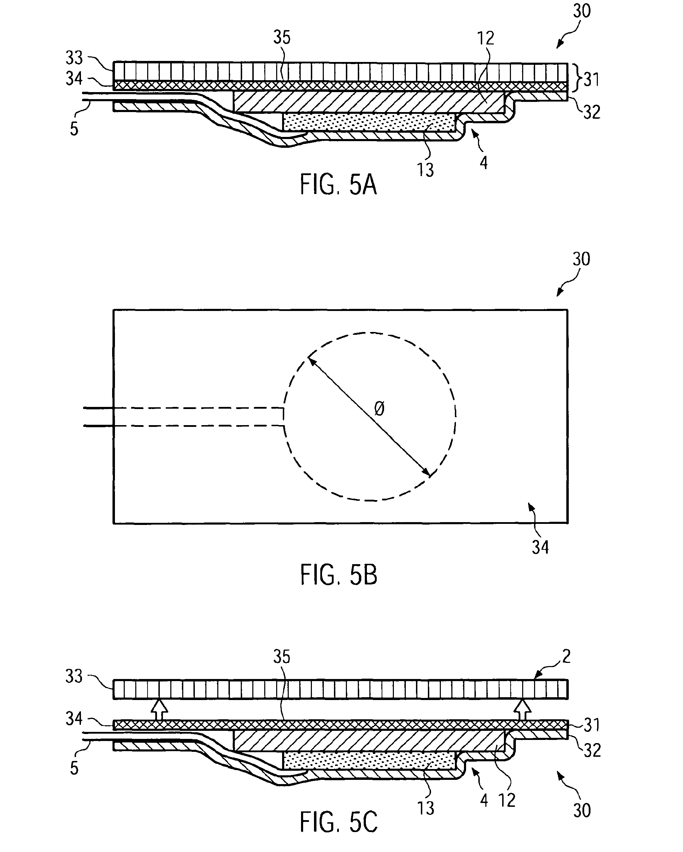

Figure 5a illustrates a schematic side view of a sensor module according to a third embodiment of the invention. Features having the same reference numerals as in previous figures are not explained in detail again, but their description is incorporated herewith by reference. The sensor module 30 comprises an acoustic transducer 4, like described above with its anode 12 and its cathode 13, and a connecting wire 5, which in Figure 5a is connected to the cathode 13. The anode 12 is of course also connected to a second wire (not shown) and could be connected in an analogous manner.

Compared to the first and second embodiment, the sensor module 30 according to the third embodiment is simplified. In this embodiment the acoustic transducer 4 and the wire 5 is actually sandwiched between a first fastening means 31 and a second fastening means 32.

The first fastening means 31 comprises a double sided sticky tape 33 and in the unmounted state, thus not yet fixed to a tactile plate 2 (see Fig. 1 or 2), a liner 34 to protect the sticky side (35) on top of the sensor module (30). Preferably, the carrier layer is out of plastic material and the thickness of the adhesive layers is less than 80µm, preferably around 70µm, to provide stability without influencing too much acoustic signals being transmitted from a tactile plate 2 (see Figure 5c).

The second fastening means 32 is typically also a sticky tape, single sided or double sided (and in this case together with its corresponding liner). In case of single sided sticky tape, the second fastening means 32 comprises an adhesive layer together with a carrier layer; in case of a double sided stick tape, the second fastening means 32 comprises a carrier layer sandwiched by two adhesive layer. In case of a double sided second fastening means 32, a liner (not shown) is provided on the second adhesive layer which can be removed when additional elements like a printed circuited board are attached to the sensor module.

Figure 5b illustrates a schematic top view of the sensor module 30. It shows the liner 34 having an essentially rectangular shape and underneath, in dotted lines, the acoustic transducer 4 and the connecting wire 5. The fastening means 31 and 32 are typically larger (in each dimension) than the diameter ⌀ of the acoustic transducer 4. As already mentioned above, the acoustic transducer 4, in case of a piezoelectric transducer, is typically disk shaped, so that using the rectangular shape of the fastening means it becomes easy to align the sensor module 30 with respect to e.g. the edges of a tactile plate 2. To improve the reproducibility of the positioning, the edge of the acoustic transducer 4 can be advantageously aligned with two borders of the fastening means 31 and 32. Thus the rectangular shape of the fastening means plays the role of a means for positioning. However, not only rectangular shapes are suitable and according to the invention, but any shape braking the circular symmetry of the transducer, in particular triangular or polygonal. As a variant alignment marks could be printed on the fastening means. To improve also the identification of different transducers, several shapes can be used.

Figure 5c illustrates the situation similar to the one of figure 2. The sensor module 30 is to be brought into contact with the tactile plate 2, as indicated by the two bold arrows, to form a touch sensing device 36. To be able to stick it to the tactile plate 2, the liner 34 has been removed from the sensor module 30.

It is of course also possible to provide more than one acoustic transducer 4 in one sensor module 30, like illustrated in Figure 3b.

Using the sticky tape the procedure of fixing the sensor module to the tactile plate is facilitated compared to the use of epoxy glue or UV or light curing glue, like in the prior art. The sticky tape provides the necessary stability and signal performance to the touch sensing device 36. In addition, for some applications, the sticky tape provides the necessary acoustic isolation, thus playing the role of the acoustic isolator 6, like in embodiment 1 and 2. Furthermore the electrical connections between the wire 5 and the anode 12 and cathode 13 also become protected. In addition, not only mechanical protection is provided but also shielding from outside electrical influences. Finally, the simple structure of the sensor module 30 leads to a reduction of fabrication costs, as the complicated gluing step of the prior art does not need to be carried out anymore.

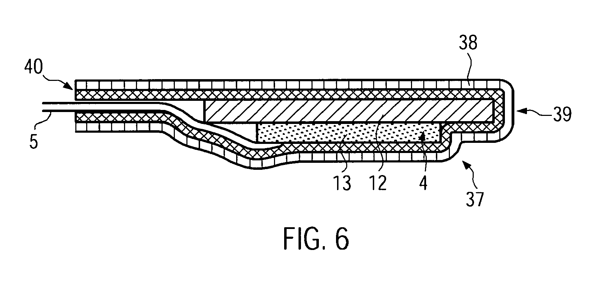

Figure 6 illustrates a fourth embodiment according to the invention, namely a variant of the sensor module 30 illustrated in Figures 5a and 5b. The only difference between the sensor module 37 with respect to the sensor module 30 is that the first and second fastening means are made out of one piece of sticky tape 38. The one piece of sticky tape is wrapped around one side 39 of the acoustic transducer 4, with the connecting wire 5 leaving the sticky tape on the opposite side 40. Of course, the wire could also leave the sticky tape 38 on the lateral sides perpendicular to the drawing plane. With this change less parts need to be assembled which further facilitates the fabrication process. Besides that the advantageous of embodiment 3 are also achieved with this sensor module.

In the following, the function of the touch sensing device 36 is described. It corresponds essentially to the description already provided above, except for the fact that between tactile plate 2 and acoustic transducer 4, the thin double sided stick tape 33 is present, which, like already mentioned above, even though having a certain filtering property, the sensed signals remain exploitable. Nevertheless the various embodiments of the invention can be combined such that e.g. the double sided sticky tape 33 has an opening corresponding to the shape of the acoustic transducer 4 or an acoustic isolator 6 or a reinforcement member 7, which could be a printed circuit board carrying the electronic devices necessary for the signal processing, could also be included into the sensor module according to embodiment 3 and 4 of the invention.

## Claims

1. Touch sensing device (1) comprising:
a tactile plate (2); and
a sensor module (3) comprising at least one acoustic transducer (4) and an acoustic isolator (6),
wherein
the acoustic isolator (6) is fixed to the tactile plate (2) such that the at least one acoustic transducer (4) is in direct contact with the tactile plate (2).

2. The touch sensing device according to claim 1, wherein the acoustic isolator (6) comprises a recess (14) and the acoustic transducer is embedded within said recess such that a coupling surface (10) of the acoustic transducer is flush-mount within the acoustic isolator or protrudes from the acoustic isolator.

3. The touch sensing device according to any one of claims 1 or 2, wherein the acoustic isolator comprises at least one channel (21) for connecting wires (5) and/or at least one conductive trace (20).

4. The touch sensing device according to any one of claims 1 to 3, wherein the tactile plate comprises an impact surface (9) and a coupling surface (8) and the acoustic transducer is disposed between the coupling surface of the tactile plate and the acoustic isolator.

5. The touch sensing device according to any one of claims 1 to 4, wherein
the acoustic transducer comprises a mounting surface (11); and wherein
a first adhesive means (15) is disposed between the acoustic isolator and the mounting surface (11) of the acoustic transducer; and
a second adhesive means (17) is disposed between the acoustic isolator and the tactile plate.

6. The touch sensing device according to claim 5, wherein the first adhesive means (15) is adapted to the material of the mounting surface (11) of the acoustic transducer and the second adhesive means (17) is adapted to the material of the tactile plate.

7. The touch sensing device according to any one of claims 1 to 6, wherein the acoustic isolator is resilient, in particular made of foams such as silicone foam or polyurethane foams.

8. Sensor module (3) for the use in a touch sensing device according to one of claims 1 to 7, the sensor module comprising:
at least one acoustic transducer (4),
an acoustic isolator (6), wherein the acoustic isolator comprises an adhesive means (17) on its surface such that, in a state where the acoustic isolator is fixed to the tactile plate, the at least one acoustic transducer (4) is in direct contact with the tactile plate of the touch sensing device.

9. Touch sensing device comprising:
a tactile plate (2); and
a sensor module (30) comprising at least one acoustic transducer (4) and a fastening means (31) to fix the sensor module (30) to a tactile plate (2), wherein
the fastening means (31) comprises a sticky tape, in particular a double sided sticky tape (33).

10. Touch sensing device according to claim 9, wherein the sensor module (30) further comprises a second fastening means (32) wherein the acoustic transducer (4) is sandwiched between the fastening means (31) and the second fastening means (32).

11. Touch sensing device according to claim 9 or 10, wherein the fastening means and the second fastening means are out of one piece of sticky tape.

12. Touch sensing device according to one of claims 9 to 11, wherein the connecting wires are sandwiched between the fastening means and the second fastening means.

13. Touch sensing device according to one of claims 9 to 12, wherein the fastening means is fixed to the tactile plate such that the at least one acoustic transducer is in direct contact with the tactile plate (2).

14. The touch sensing device or the sensor module according to any one of claims 1 to 13, further comprising a reinforcement member (7), in particular a printed circuit board, wherein
the reinforcement member (7) is disposed over the side of the acoustic isolator opposite to the acoustic transducer.

15. Touch sensing device or sensor module according to any one of claims 1 to 14, wherein the fastening means (31) and/or the second fastening means (32) comprises a means for positioning and/or identifying transducers.

16. Sensor module for the use in a touch sensing device according to one of claims 9 to 15, comprising at least one acoustic transducer and a fastening means to fix the sensor module to the tactile plate (2), wherein
the fastening means comprises a sticky tape, in particular a double sided sticky tape.
